(19) Europäisches Patentamt
European Patent Office
Office européen des brevets

(11) **EP 1 750 098 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(51) Int Cl.:
***G01D 5/20*** *(2006.01)*

(21) Anmeldenummer: **06014522.4**

(22) Anmeldetag: **13.07.2006**

(54) **Messanordnung**

Measuring apparatus

Dispositif de mesure

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.07.2005 DE 102005035316**

(43) Veröffentlichungstag der Anmeldung:
**07.02.2007 Patentblatt 2007/06**

(73) Patentinhaber: **Diehl Aerospace GmbH**
**88662 Überlingen (DE)**

(72) Erfinder:
• **Riedel, Stefan**
**88662 Nussdorf (DE)**

• **Sautter, Axel**
**88662 Überlingen (DE)**
• **Späh, Jürgen**
**88662 Überlingen (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
DE-A1- 10 159 110    US-A- 4 628 499
US-A- 4 651 130    US-A- 4 982 156
US-A1- 2004 027 118    US-A1- 2005 046 593

EP 1 750 098 B1

**Beschreibung**

Die Erfindung betrifft eine Messanordnung mit einem nach dem Prinzip eines Differentialtransformators arbeitenden Weglängensensor, der eine Primärspule sowie eine erste und eine zweite Sekundärspule umfasst, und mit einer Schaltungsanordnung, die zur Bestimmung einer Weglänge mit der ersten und zweiten Sekundärspule schaltungstechnisch verbunden ist. Des weiteren betrifft die Erfindung ein Verfahren zur Bestimmung einer Weglänge mit einem solchen Weglängensensor.

Gattungsgemäße Weglängensensoren sind z.B. aus den Dokumenten US4982156A, US2005/046593A1 oder US4651130A bekannt.

Ein nach dem Prinzip eines Differentialtransformators arbeitender Weglängensensor, auch VDT (Variable Differential Transformer) genannt, ist geeignet, lineare Verschiebungen mit hoher Auflösung in einem Bereich zwischen einigen Tausendstel-Millimetern bis über einen Meter direkt zu messen. Aufgrund der hohen Genauigkeit und der Robustheit werden derartige Weglängensensoren insbesondere im Bereich der Luftfahrt zur mechanischen Positionsbestimmung eingesetzt. Eine exakte Positionsbestimmung ist beispielsweise für die Steuerung der Landeklappen oder der Ruderblätter unerlässlich. Aber auch zur Bestimmung der Position von Türen, insbesondere bei einer automatischen Türsteuerung, können derartige Weglängensensoren sinnvoll eingesetzt werden.

Ein nach dem Prinzip eines Differentialtransformators arbeitender Weglängensensor umfasst eine Primärspule sowie zwei Sekundärspulen, die auf einem entsprechend ausgebildeten zylindrischen Körper mit einer zentrischen Bohrung aufgewickelt sind. Dabei ist die Primärspule dem zylindrischen Körper mittig und die beiden Sekundärspulen vor bzw. hinter der Primärspule aufgewickelt, so dass sich entlang des zylindrischen Körpers eine Abfolge der Art Sekundärspule-Primärspule-Sekundärspule ergibt. In der zentrischen Bohrung kann sich ein Kern aus ferromagnetischem Material frei bewegen, der über ein Verbindungselement mit dem zu messenden Objekt verbunden werden kann.

Die Längsausdehnung des ferromagnetischen Kerns ist derart festgelegt, dass seine Position innerhalb der zentrischen Bohrung die Größe des magnetischen Flusses zwischender Primär- und den Sekundärspulen beeinflusst. Wird der Kern aus seiner Ruhelage in der Mitte des zylindrischen Körpers, d.h. auf Höhe der Primärspule, in Richtung einer der Sekundärspulen bewegt, so erhöht sich hierbei der magnetische Fluss zwischen der Primärspule und derjenigen Sekundärspule, in deren Richtung sich der Kern bewegt. Entsprechend verringert sich der magnetische Fluss bezüglich der Sekundärspule, aus welcher der Kern herausbewegt wird. Wird die Primärwicklung mit einer sinusförmigen Erregerspannung gespeist, wird eine Wechselspannung in den Sekundärspulen induziert, deren Größe abhängig von der axialen Verschiebung des Kerns ist. Die beiden in den Sekundärspulen induzierten Sekundärspannungen bilden das Ausgangssignal des beschriebenen Weglängensensors und werden zur Positionsbestimmung des in der zentrischen Bohrung bewegbaren Kerns ausgewertet.

Üblicherweise werden zur Bestimmung der Weglänge die Ausgangssignale eines VDT-Sensors, d.h. die in den Sekundärspulen induzierten Spannungen, mittels analoger Schaltungen oder mittels analoger Bausteine verarbeitet. Da sich die Position des Weglängensensors, d.h. die Lageveränderung des ferromagnetischen Kerns gegenüber seiner Ruheposition, aus der Differenz der Absolutwerte der beiden Sekundärspannungen errechnen lässt, ist es beispielsweise bekannt, die Ausgangssignale eines VDT-Sensors einem Gleichrichter aufzuschalten. Auch die Differenzbildung der beiden gleichgerichteten Sekundärspannungen erfolgt üblicherweise mittels analoger Bausteine. Nachteiligerweise weist eine Messanordnung mit derartigen Auswerteschaltungen für einen VDT-Sensor für Anwendungen in der Luftfahrt eine ungenügende Ausfallsicherheit und verbesserbare Fehlertoleranzen auf.

Es ist daher Aufgabe der Erfindung, eine Messanordnung der eingangs genannten Art anzugeben, die eine hohe Ausfallsicherheit und kleine Fehlertoleranzen in der Bestimmung der Weglänge aufweist.

Diese Aufgabe wird für eine Messanordnung mit einem nach dem Prinzip eines Differentialtransformators arbeitenden Weglängensensor nach Anspruch 1, der eine Primärspule sowie eine erste und eine zweite Sekundärspule umfasst, und mit einer Schaltungsanordnung, die zur Bestimmung einer Weglänge mit der ersten und zweiten Sekundärspule schaltungstechnisch verbunden ist, erfindungsgemäß dadurch gelöst, dass die Schaltungsanordnung einen Multiplexer, einen AD-Wandler und einen digitalen Logikbaustein umfasst, wobei dem Multiplexer die erste und die zweite Sekundärspule über jeweils eine Eingangsstufe aufgeschaltet sind, der Ausgang des Multiplexers schaltungstechnisch mit dem Eingang des AD-Wandlers verbunden ist, und der Ausgang des AD-Wandlers in den Eingang des digitalen Logikbausteins geführt ist, der zur Bestimmung der Weglänge aus den abwechselnd vom Multiplexer erhaltenen Eingangssignalen ausgebildet ist.

Die Erfindung geht dabei in einem ersten Schritt von der Überlegung aus, dass die Ausfallsicherheit einer Schaltungsanordnung und damit einer Messanordnung als solcher verbessert werden kann, indem die Anzahl der notwendigen Bausteine verringert wird. Dies kann in einer Schaltungsanordnung für einen VDT-Sensor dadurch erreicht werden, dass die Ausgangsspannungen der beiden Sekundärspulen möglichst frühzeitig auf einen gemeinsamen Messkanal geschaltet werden. Dies geschieht dadurch, dass die erste und zweite Sekundärspule über eine jeweilige Eingangsstufe einem Multiplexer aufgeschaltet sind. Da der Multiplexer abwechselnd zwischen den induzierten Spannungen der ersten und der zweiten Sekundärspule hin- und herschaltet, können in der Schaltungsanordnung ab dem Multiplexer in einfacher Ausfertigung vorliegende Bausteine für die Messung beider Spannungen verwendet werden. Die Verwendung von getrennten Eingangsstufen ist zur Pegelanpassung erforderlich. Durch die Reduktion der Bausteine insgesamt wird die Ausfallsicherheit verbessert.

In einem weiteren Schritt geht die Erfindung von der Überlegung aus, dass dadurch dass ein digitaler Logikbaustein zur Bestimmung der Weglänge verwendet wird, der Einsatz einer Software vermieden werden kann. Etwaige softwarebedingte Fehler werden hierdurch sicher vermieden. In einem digitalen Logikbaustein werden die durchzuführenden Logik-Operationen fest vorgeschrieben. Für einen derartigen Logikbaustein eignet sich beispielsweise ein CPLD (Complex Programmable Logic Device), ein FPGA (Feeled Programmable Gate Array) oder ein ASIC (Application Specific Integrated Circuit) Im Übrigen kann bei Verwendung eines digitalen Logikbausteins auf einen digitalen Rechner verzichtet werden, der wiederum ein gewisses Ausfallrisiko in sich birgt.

Schließlich erkennt die Erfindung in einem dritten Schritt, dass sich die Messgenauigkeit der Schaltungsanordnung dadurch verbessern lässt, dass möglichst viele zur Ermittlung der Weglänge notwendige Logikoperationen mit identischen Bausteinen durchgeführt werden. Dies ergibt sich vorliegend bereits aus der möglichst frühzeitigen Schaltung der beiden induzierten Spannungen der Sekundärspulen auf einen gemeinsamen Messkanal. Dadurch, dass der Ausgang des Multiplexers schaltungstechnisch mit dem Eingang des AD-Wandlers verbunden ist, wird zusätzlich eine Erhöhung der Messgenauigkeit erzielt, da alle Logikoperationen digital durchgeführt werden. Hierdurch wird nämlich ein natürlicherweise durch Analogbausteine hervorgerufener Offset der aus den beiden induzierten Spannungen abgeleiteten weiteren Spannungssignalen vermieden. Da die Weglänge durch Differenzbildung bestimmt wird, verringert ein derartiger Offset die Messgenauigkeit.

Zur Bestimmung der Weglänge schaltet der Multiplexer abwechselnd die induzierte Spannung der ersten und der zweiten Sekundärspule auf den Eingang des AD-Wandlers. Entsprechend liegt dem Eingang des digitalen Logikbausteins abwechselnd das digitalisierte Spannungssignal der ersten Sekundärspule und das digitalisierte Spannungssignal der zweiten Sekundärspule an. Durch Differenzbildung der Absolutwerte beider Spannungen kann auf die Weglänge zurückgeschlossen werden. Da die Summe der Effektivwerte der Spannungen beider Sekundärspulen unabhängig von der Position des ferromagnetischen Kerns konstant ist, ist es üblich, als Ausgangswert zur Bestimmung der Weglänge die auf diese Summe normierte Differenz der Absolutwerte der beiden induzierten Spannungen auszugeben.

Vorteilhafterweise ist der digitale Logikbaustein zur Abtastung der abwechselnd vom Multiplexer erhaltenen Eingangssignale ausgebildet. Durch Erhöhung der Abtastrate kann hierbei die Messgenauigkeit vergrößert werden. Mit Hilfe der Abtastung kann innerhalb eines vorgegebenen Zeitraumes den gemessenen Spannungsverläufen der zugehörige Effektivwert, der jeweilige Spitzenwert oder der Mittelwert des gleichgerichteten Signals ermittelt werden. Sowohl Effektivwert, Spitzenwert oder Mittelwert können dann zur Differenzbildung der induzierten Spannungen und damit zur Bestimmung der Weglänge herangezogen werden.

Weiter von Vorteil ist es, wenn der digitale Logikbaustein mindestens zu einer Betragsbildung, zu einer Addition, zu einer Subtraktion und zu einer Division von Eingangssignalen oder von aus den Eingangssignalen abgeleiteten Signalen ausgebildet ist. Ein derartiger Logikbaustein ermöglicht die Differenzbildung der Absolutbeträge der induzierten Spannungen sowie die Normierung der Differenz auf die Summe der Effektivwerte entsprechend der Formel:

$$Q = \frac{V_1 - V_2}{V_{1,eff} + V_{2,eff}}$$

wobei Q die normierte Weglänge, $V_1$ und $V_2$ jeweils den Absolutbetrag der induzierten Spannungen und $V_{1,eff}$ und $V_{2,eff}$ jeweils die Effektivwerte der beiden induzierten Spannungen bezeichnen.

In diesem Fall werden in dem Logigbaustein sämtliche Logikoperationen zur Ermittlung der Weglänge durchgeführt. Selbstverständlich ist es auch möglich, nur einen Teil der erforderlichen Logikoperationen in dem Logikbaustein durchzuführen, und die weiteren erforderlichen Operationen auf andere Art und Weise, beispielsweise in einem nachgeschalteten Bauteil durchzuführen.

In einer weiteren vorteilhaften Ausgestaltung der Erfindung ist der digitale Logikbaustein zu einer Offset-Korrektur der abwechselnd vom Multiplexer erhaltenen Eingangssignale ausgebildet. Hierbei ermittelt der Logikbaustein durch Integration über einen vorgegebenen Zeitraum bei bekanntem Spannungsverlauf einen Offset und bringt diesen bei der Bestimmung der Weglänge bezüglich der digitalisierten Verläufe der induzierten Spannungen in Abzug. Hierdurch wird - wie bereits erwähnt - die Messgenauigkeit verbessert. Da der Offset dem gemessenen Signal direkt entnommen wird, erfolgt eine Offset-Korrektur während des Betriebs der Messanordnung. Der Integration zur Ermittlung des Offsets entspricht im Falle der Abtastung die Summenbildung über die Abtastwerte. Vorteilhafterweise ist der digitale Logikbaustein ein FPGA.

Gemäß der Erfindung umfasst die Schaltungsanordnung einen mit dem digitalen Logikbaustein, dem Multiplexer und einem Spannungsgenerator verbundene Kontrolleinheit, wobei die Primärspule an dem Spannungsgenerator angeschlossen ist, und wobei die Kontrolleinheit zur Erzeugung einer mit dem Takt des Logikbausteins zeitlich korrelierten Erregerspannung des Spannungsgenerators und zu einem mit dem Takt des Logikbausteins korrelierten Umschalten des Multiplexers ausgebildet ist.

Für jede Bestimmung des Effektivwerts und insbesondere für die Bestimmung des Mittelwerts des Absolutbetrages der induzierten Spannungen ist es erforderlich, eine Periode möglichst exakt abzutasten. Aus diesem Grund ist es von Vorteil, die Erregerspannung für die Primärspule aus dem Takt des Logikbausteins abzuleiten. Wird der Multiplexer zeitlich mit dem Takt des Logikbausteins korreliert umgeschaltet, so ist es einfach möglich, für die Logikoperationen des Logikbausteins exakt eine Periode der jeweils induzierten Spannungen zu erfassen. Auf diese Weise wird die Messgenauigkeit weiter verbessert.

Es ist ebenfalls Aufgabe der Erfindung, ein Verfahren zur Bestimmung einer Weglänge der eingangs genannten Art anzugeben, welches mit einer hohen Ausfallsicherheit und kleinen Fehlertoleranzen in der Bestimmung der Weglänge durchführbar ist.

Diese Aufgabe wird durch ein Verfahren nach Patentanspruch 7 zur Bestimmung einer Weglänge mit einem nach dem Prinzip eines Differentialtransformators arbeitenden Weglängensensor mit einer Primärspule sowie einer ersten und zweiten Sekundärspule erfindungsgemäß dadurch gelöst, dass als Erregerspannung für die Primärspule eine Wechselspannung verwendet wird, dass für eine Periode der zeitliche Verlauf der in der ersten Sekundärspule induzierten ersten Sekundärspannung gemessen wird, dass danach wiederum für eine Periode der zeitliche Verlauf der in der zweiten Sekundärspule induzierten zweiten Sekundärspannung gemessen wird, dass aus den gemessenen Sekundärspannungen jeweils Absolutbeträge ermittelt werden und aus der Differenz dieser Absolutbeträge der ersten und zweiten Sekundärspannungen die Weglänge bestimmt wird. Dabei wird bevorzugt eine Messanordnung wie oben beschrieben benutzt und der zeitliche Verlauf der induzierten Sekundärspannungen jeweils nach Ablauf einer Einschwingzeit gemessen.

In Weiterbildung der Erfindung kann vorgesehen sein, dass nach der Messung der zweiten Sekundärspannung wiederum für eine Periode der zeitliche Verlauf der in der ersten Sekundärspule induzierten ersten Sekundärspannung gemessen wird.

Als Absolutbetrag der Sekundärspannung wird bevorzugt der Gleichrichtermittelwert des zeitlichen Verlaufs der jeweiligen Sekundärspannung verwendet.

Ausführungsbeispiele der Erfindung werden anhand einer Zeichnung näher erläutert. Dabei zeigen:

Figur 1     schematisch den Aufbau eines nach dem Prinzip eines Differentialtransformators arbeitenden Weglängensensors,

Figur 2     in einer schematischen Darstellung eine Messanordnung mit einem Weglängensensor gemäß Figur 1, und

Figur 3     in einem Diagramm den zeitlichen Ablauf der Weglängenbestimmung mittels der in Figur 2 gezeigten Messanordnung.

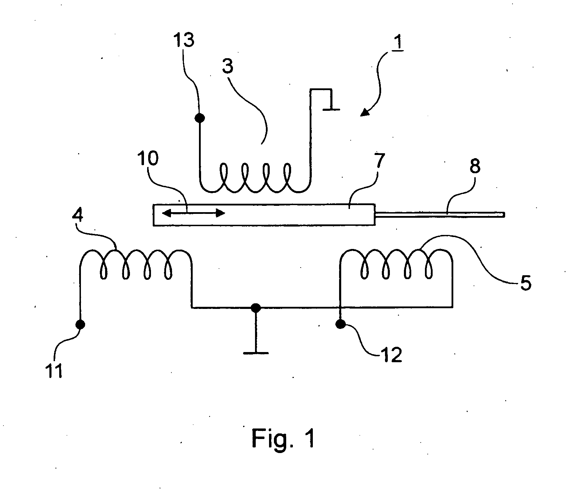

Figur 1 zeigt schematisch einen Weglängensensor 1, der nach dem Prinzip eines Diffentialtransformators arbeitet. Hierzu umfasst der Weglängensensor 1 eine Primärspule 3 sowie zwei Sekundärspulen 4 und 5. Die Primärspule 3 sowie die Sekundärspulen 4 und 5 sind entsprechend versetzt auf einem zylindrischen Körper aufgewickelt, der eine zentrische Bohrung aufweist. Im Inneren der zentrischen Bohrung kann sich ein Stellelement 7 mit einem Kern aus einem ferromagnetischen Material frei bewegen. Mittels eines Verbindungselements 8 wird eine lineare Verschiebung eines zu messenden Objekts auf das Stellelement 7 entsprechend der eingezeichneten Pfeile 10 übertragen.

Durch eine Verschiebung des Stellelements 7 entsprechend der Pfeile 10 wird die Größe des magnetischen Flusses zwischen der Primärspule 3 und den Sekundärspulen 4 bzw. 5 verändert. Bewegt sich beispielsweise das Stellelement 7 ausgehend von der dargestellten Ruheposition in Richtung auf die Sekundärspule 5, so wird der für die magnetische Kopplung zwischen der Primärspule 3 und der Sekundärspule 5 verantwortliche magnetische Fluss erhöht. Entsprechend erhöht sich die in der Sekundärspule 5 induzierte Spannung. Als Erregerspannung für die Primärspule 3 wird hierzu eine sinusförmige Wechselspannung verwendet.

Bei einem Weglängensensor 1 ist die Summe der Effektivwerte der in den Sekundärspulen 4 und 5 induzierten Spannungen unabhängig von der Position des Stellelements 7 konstant. Aus der Differenz der Absolutwerte der induzierten Spannungen kann auf die Position des Stellelements 7, ausgehend von seiner Ruheposition, geschlossen werden. Die Differenz wird dabei meist auf die Summe der Effektivwerte normiert, so dass die Position des Stellelements 7 wie folgt berechnet wird:

$$Q = \frac{V_1 - V_2}{V_{1.eff} + V_{2,eff}}$$

wobei Q die normierte Weglänge, $V_1$ und $V_2$ jeweils den Absolutbetrag der induzierten Spannungen und $V_{1,eff}$ und $V_{2,eff}$ jeweils die Effektivwerte der beiden induzierten Spannungen bezeichnen.

Zum Auslesen der in den Sekundärspulen 4 und 5 induzierten Spannungen weisen diese Ausgänge 11 bzw. 12 auf, wobei das jeweils andere Ende der Sekundärspulen 4 und 5 auf Erdpotenzial liegt. Zur Erregung der Primärspule 3 weist diese einen Eingang 13 auf, wobei auch die Primärspule 3 gegenüber Erdpotenzial geschaltet ist.

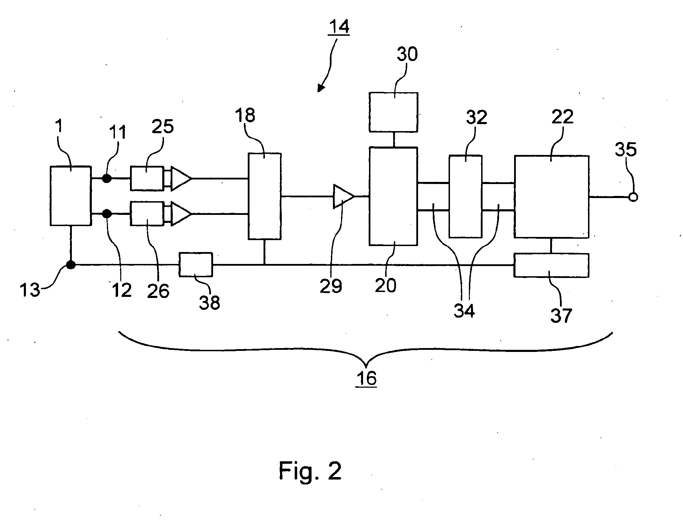

In Figur 2 ist schematisch eine Messanordnung 14 dargestellt, die einen nach dem Prinzip eines Differentialtransformators arbeitenden Weglängensensor 1 sowie eine ihm zugeordnete Schaltungsanordnung 16 umfasst. Die Schaltungsanordnung 16 ist hierzu mit den Figur 1 entnehmbaren Ausgängen 11 und 12 des Weglängensensors 1 verbunden, an welchen die beiden in den Sekundärspulen induzierten Spannungen anliegen. Für die Erregung der Primärspule ist der Weglängensensor 1 weiter über den Eingang 13, der ebenfalls Figur 1 entnehmbar ist, mit der Schaltungsanordnung 16 verbunden.

Die Schaltungsanordnung 16 umfasst einen Multiplexer 18, einen AD-Wandler 20 sowie einen digitalen Logikbaustein 22, der als FPGA ausgeführt ist. Dem Multiplexer 18 sind über eine erste Eingangsstufe 25 und eine zweite Eingangsstufe 26 mittels der Ausgänge 11 und 12 die in den beiden Sekundärspulen des Weglängensensors 1 induzierten Spannungen aufgeschaltet. In der Schaltungsanordnung 16 werden nach dem Multiplexer 18 beide induzierten Spannungen einem einzigen Messkanal aufgeschaltet. Hierzu ist der Ausgang des Multiplexers 18 über einen Signalverstärker 29 schaltungstechnisch mit dem Eingang des AD-Wandlers 20 verbunden. Der AD-Wandler digitalisiert abwechselnd die ihm vom Multiplexer 18 zugeleiteten Spannungen der ersten und der zweiten Sekundärspule des Weglängensensors 1. Über eine auf 16 Bit ausgelegte Datenleitung 34 werden die digitalisierten Spannungsverläufe vom Ausgang des AD-Wandlers 20 über einen Buffer 32 dem digitalen Logikbaustein 22 zugeleitet. Der Buffer 32 dient der Zwischenspeicherung der digitalisierten Spannungsverläufe. Über den Signalausgang 35 ist das vom Logikbaustein 22 generierte Signal zur Bestimmung der Weglänge abgreifbar.

Für die Bereitstellung einer Vergleichsspannung ist dem AD-Wandler 20 weiter ein Vergleichsspannungsgenerator 30 zugeordnet. Ferner ist eine mit dem digitalen Logikbaustein 22 verbundene Kontrolleinheit 37 vorgesehen, die über entsprechende Verbindungen entsprechend dem Takt des Logikbausteins 22 den Multiplexer 18 steuert und die Primärspule des Weglängensensors 1 über den Anschluss 13 mit einer Erregerspannung versorgt. Die Erregerspannung wird hierzu von einem Spannungsgenerator 38 geliefert. Vorliegend wird der Multiplexer 18 im Takt des Logikbausteins 22 geschaltet und auch die Primärspule des Weglängensensors 1 mit einer Wechselspannung im Takt des Logikbausteins 22 versorgt.

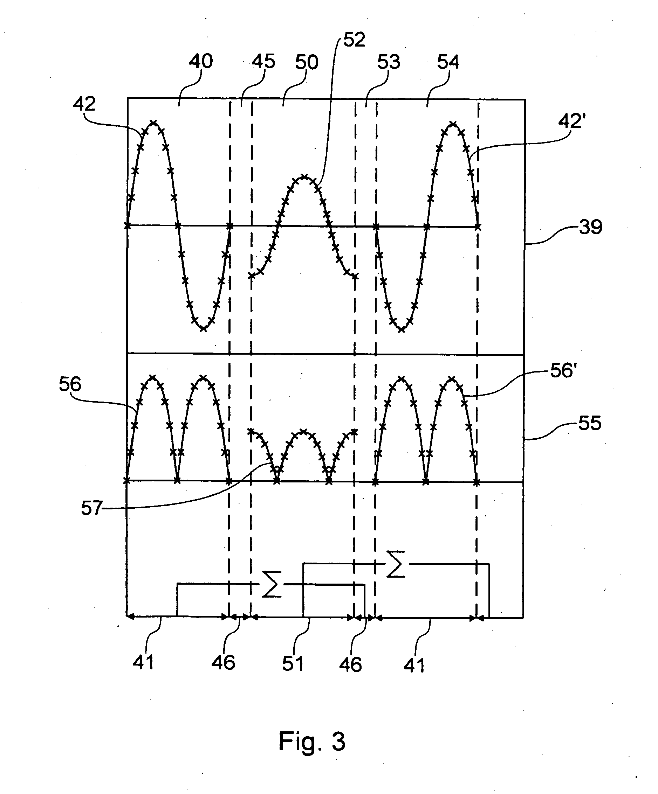

Die Bestimmung einer Weglänge mittels der in Figur 2 gezeigten Messanordnung wird durch Figur 3 näher erläutert. Figur 3 zeigt hierzu in einem Diagramm den zeitlichen Verlauf verschiedener in der Schaltungsanordnung 16 gemäß Figur 2 gemessener oder abgeleiteter Spannungen. Die Höhe der Spannungen ist dabei auf der Ordinate und die Zeit auf der Abzisse aufgetragen.

Dem oberen Block 39 des Diagramms ist der jeweils für eine Periode gemessene zeitliche Verlauf der in den beiden Sekundärspulen induzierten Spannungen zu entnehmen. Für die Bestimmung der Weglänge wird zunächst entsprechend dem dargestellten ersten Zeitfenster 40 exakt für eine Periode der zeitliche Verlauf der in der ersten Sekundärspule induzierten ersten Sekundärspannung 42 durch Abtastung im digitalen Logikbaustein gemessen. Um exakt eine Periode messen zu können, wird die Primärspule des Weglängensensors im Takt des Logikbausteins erregt. Die erste Abtastzeit 41 entspricht daher exakt der Länge einer Periode der ersten Sekundärspannung 42.

Im zweiten Zeitfenster 45 schaltet der Multiplexer 18 um auf die in der zweiten Sekundärspule induzierte Spannung. Um Einschwingzeiten der verwendeten Bausteine zu berücksichtigen, erfolgt für eine Einschwingzeit 46 durch den Logikbaustein keine weitere Messung. Nach Ablauf der Einschwingzeit 46 wird durch den Logikbaustein wiederum exakt für eine Periode der zeitliche Verlauf der in der zweiten Sekundärspule induzierten zweiten Sekundärspannung 52 abgetastet. Dies ist im dritten Zeitfenster 50 dargestellt. Dabei entspricht wiederum die zweite Abtastzeit 51 exakt einer Periodendauer der zweiten Sekundärspannung 52. Bei einem Vergleich des zeitlichen Verlaufs der ersten Sekundärspannung im ersten Zeitfenster 40 mit dem zeitlichen Verlauf der zweiten Sekundärspannung 52 im dritten Zeitfenster 50 wird die auf Grund des Aufbaus des Weglängensensors 1 resultierende Phasenverschiebung zwischen erster und zweiter Sekundärspannung 42 bzw. 52 ersichtlich. Diese spielt jedoch zur Bestimmung der Weglänge selbst keine Rolle.

Nach Beendigung der Abtastung der zweiten Sekundärspannung 52 wird im vierten Zeitfenster 53 wiederum für die Einschwingzeit 46 die Einschwingung der Bauteile nach einem erneuten Umschalten des Multiplexers 18 abgewartet.

Nach Ablauf der Einschwingzeit 46 wird - wie im fünften Zeitfenster 54 dargestellt - vom digitalen Logikbaustein 22 für exakt eine Periode der zeitliche Verlauf der ersten Sekundärspannung 42' zu einem späteren Zeitpunkt durch Abtastung gemessen.

Im unteren Block 55 des Diagramms ist die Bildung des Betrages der im oberen Block 39 dargestellten Spannungsverläufe gezeigt. So ist der Verlauf des Betrages der ersten Sekundärspannung 56 und 56' im ersten bzw. fünften Zeitfenster 40 bzw. 54 entnehmbar. Im dritten Zeitfenster 50 ist der Verlauf des Betrages der zweiten Sekundärspannung 57 eingetragen.

Für die Berechnung der Weglänge ist die Differenz der Absolutbeträge des zeitlichen Verlaufs von erster und zweiter Sekundärspannung erforderlich. Folglich kann im dargestellten Fall eine Weglänge jeweils nach Ablauf von zwei Abtastzeiten 41 bzw. 51 und einer Einschwingzeit 46 bestimmt werden. Dies ist durch die eingezeichneten Summensymbole $\Sigma$ verdeutlicht. Es hat sich gezeigt, dass für die Bildung der Differenz der Absolutbeträge der Mittelwert der für eine Periode gemessenen abgetasteten Absolutwerte hinsichtlich der Fehlertoleranzen am günstigsten ist. Dieser Gleichrichtermittelwert wird durch Summation des Betrags der abgetasteten Spannungswerte und anschließender Division der Summe durch die Anzahl der Abtastwerte gebildet.

## Bezugszeichenliste

| 1 | Weglängensensor |
|---|---|
| 3 | Primärspule |
| 4,5 | Sekundärspule |
| 7 | Stellelement |
| 8 | Verbindungselement |
| 10 | Pfeile |
| 11,12 | Ausgänge Sekundärspule |
| 13 | Eingang Primärspule |
| 14 | Messanordnung |
| 16 | Schaltungsanordnung |
| 18 | Multiplexer |
| 20 | AD-Wandler |
| 22 | digitaler Logikbaustein |
| 25 | erste Eingangsstufe |
| 26 | zweite Eingangsstufe |
| 29 | Signalverstärker |
| 30 | Vergleichsspannungsgenerator |
| 32 | Buffer |
| 34 | Datenleitung |
| 35 | Signalausgang |
| 37 | Kontrolleinheit |
| 38 | Spannungsgenerator |
| 39 | oberer Block |
| 40 | erstes Zeitfenster |
| 41 | erste Abtastzeit |
| 42, 42' | erste Sekundärspannung |
| 45 | zweites Zeitfenster |
| 46 | Einschwingzeit |
| 50 | drittes Zeitfenster |
| 51 | zweite Abtastzeit |
| 52 | zweite Sekundärspannung |
| 53 | viertes Zeitfenster |
| 54 | fünftes Zeitfenster |
| 55 | unterer Block |
| 56, 56' | Betrag erste Sekundärspannung |
| 57 | Betrag zweite Sekundärspannung |

## Patentansprüche

1. Messanordnung (14) mit einem nach dem Prinzip eines Differentialtransformators arbeitenden Weglängensensor (1), der eine Primärspule (3) sowie eine erste und eine zweite Sekundärspule (4 bzw. 5) umfasst, und mit einer Schaltungsanordnung (16), die zur Bestimmung einer Weglänge mit der ersten und zweiten Sekundärspule (4 bzw. 5) schaltungstechnisch verbunden ist,
wobei die Schaltungsanordnung (16) einen Multiplexer (18), einen AD-Wandler (20) und einen digitalen Logikbaustein (22) umfasst, dem Multiplexer (18) die erste und die zweite Sekundärspule (4 bzw. 5) über jeweils eine Eingangsstufe aufgeschaltet sind, der Ausgang des Multiplexers (18) schaltungstechnisch mit dem Eingang des AD-Wandlers (20) verbunden ist und der Ausgang des AD-Wandlers (20) in den Eingang des digitalen Logikbausteins (22) geführt ist, der zur Bestimmung der Weglänge aus den abwechselnd vom Multiplexer (20) erhaltenen Eingangssignalen ausgebildet ist, wobei weiterhin ein Spannungsgenerator (38) zur Versorgung der Primärspule (3) mit Wechselspannung vorgesehen und an selbige angeschlossen ist, die Schaltungsanordnung (16) eine mit dem digitalen Logikbaustein (22), dem Multiplexer (18) und dem Spannungsgenerator (38) verbundene Kontrolleinheit (37) umfasst, die zur Erzeugung einer mit dem Takt des Logikbausteins (22) zeitlich korrelierten Erregerspannung des Spannungsgenerators (38) und zu einem mit dem Takt des Logikbausteins (22) korrelierten Umschalten des Multiplexers (18) ausgebildet ist,
und wobei der Multiplexer (18) und der Logikbaustein (22) derart ausgebildet sind, dass der zeitliche Verlauf der in den Sekundärspulen (4 und 5) induzierten Spannungen jeweils über exakt eine Periode der Wechselspannung gemessen wird.

2. Messanordnung (14) nach Anspruch 1,
**dadurch gekennzeichnet,**
**dass** der digitale Logikbaustein (22) zur Abtastung der abwechselnd vom Multiplexer (98) erhaltenen Eingangssignale ausgebildet ist.

3. Messanordnung (14) nach Anspruch 1 oder 2,
**dadurch gekennzeichnet,**
**dass** der digitale Logikbaustein (22) mindestens zu einer Betragsbildung, zu einer Addition, zu einer Subtraktion und zu einer Division von Eingangssignalen oder von aus den Eingangssignalen abgeleiteten Signalen ausgebildet ist.

4. Messanordnung (14) nach Anspruch 3,
**dadurch gekennzeichnet,**
**dass** der digitale Logikbaustein (22) dafür ausgebildet ist, durch Abtasten der abwechselnd vom Multiplexer (18) erhaltenen Eingangssignale periodisch die Summe deren Effektivwerte sowie die Differenz der Mittelwerte ihrer Absolutwerte zu ermitteln und durch Quotientenbildung hieraus die Weglänge zu bestimmen.

5. Messanordnung (14) nach einem der vorhergehenden Ansprüche,
**dadurch gekennzeichnet,**
**dass** der digitale Logikbaustein (22) zu einer Offset-Korrektur der abwechselnd vom Multiplexer (18) erhaltenen Eingangssignale ausgebildet ist.

6. Messanordnung (14) nach einem der vorhergehenden Ansprüche,
**dadurch gekennzeichnet,**
**dass** der digitale Logikbaustein (22) ein FPGA ist.

**7.** Verfahren zur Bestimmung einer Weglänge mit einem nach dem Prinzip eines Differentialtransformators arbeitenden Weglängensensor (1) - insbesondere einer Messanordnung (14) nach einem der vorhergehenden Ansprüche - mit einer Primärspule (3) sowie einer ersten und zweiten Sekundärspule (4 bzw. 5),
**dadurch gekennzeichnet,**
**dass** als Erregerspannung für die Primärspule (3) eine Wechselspannung verwendet wird,
**dass** für exakt eine Periode der Wechselspannung der zeitliche Verlauf der in der ersten Sekundärspule (4) induzierten ersten Sekundärspannung (42) gemessen wird,
**dass** danach wiederum für exakt eine Periode der Wechselspannung - bevorzugt nach Ablauf einer Einschwingzeit (46) - der zeitliche Verlauf der in der zweiten Sekundärspule (5) induzierten zweiten Sekundärspannung (52) gemessen wird,
**dass** das Umschalten zwischen erster und zweiter Sekundärspule (4 bzw. 5) zur Messung der induzierten Sekundärspannung (42 bzw. 52) über einen Multiplexer (18) erfolgt,
**dass** weiterhin die Erregerspannung und das Umschalten des Multiplexers (18) mit dem Takt eines Logikbausteins (22) zeitlich korreliert sind und dass aus den gemessenen Sekundärspannungen (42 bzw. 52) die Weglänge bestimmt wird.

**8.** Verfahren nach Anspruch 7,
**dadurch gekennzeichnet,**
**dass** aus den gemessenen Sekundärspannungen (42 bzw. 52) jeweils Absolutbeträge ermittelt werden und aus der Differenz dieser Absolutbeträge der ersten und zweiten Sekundärspannungen (42 bzw. 52) die Weglänge bestimmt wird.

**9.** Verfahren nach Anspruch 7 oder 8,
**dadurch gekennzeichnet,**
**dass** nach der Messung der zweiten Sekundärspannung (52) wiederum für eine Periode und bevorzugt nach Ablauf einer Einschwingzeit (46) der zeitliche Verlauf der in der ersten Sekundärspule (5) induzierten ersten Sekundärspannung (52) gemessen wird.

**10.** Verfahren nach einem der Ansprüche 7 bis 9,
**dadurch gekennzeichnet,**
**dass** als Absolutbetrag der Sekundärspannung (42 bzw. 52) der Gleichrichtermittelwert des zeitlichen Verlaufs der jeweiligen Sekundärspannung (42 bzw. 52) verwendet wird.

**Claims**

**1.** Measurement arrangement (14) having a movement distance sensor (1) which operates on the principle of a differential transformer and has a primary coil (3) as well as a first and a second secondary coil (4 and 5, respectively), and having a circuit arrangement (16) whose circuitry is connected to the first and second secondary coils (4 and 5, respectively) in order to determine a movement distance,
the circuit arrangement (16) comprising a multiplexer (18), an A/D converter (20) and a digital logic module (22), the multiplexer (18) in each case being connected to the first and the second secondary coil (4 and 5, respectively) via an input stage, the circuitry of the output of the multiplexer (18) being connected to the input of the A/D converter (20), and the output of the A/D converter (20) being passed to the input of the digital logic module (22) which is designed to determine the movement distance from the input signals received alternately from the multiplexer (18), a voltage generator (38) also being provided for the purpose of supplying the primary coil (3) with AC voltage and being connected to said coil, the circuit arrangement (16) comprising a monitoring unit (37) which is connected to the digital logic module (22), to the multiplexer (18) and to the voltage generator (38) and is designed to produce an excitation voltage, which is correlated in time with the clock cycle of the logic module (22), for the voltage generator (38) and to switch the multiplexer (18) in a manner correlated with the clock cycle of the logic module (22),
and the multiplexer (18) and the logic module (22) being designed in such a manner that the time profile of the voltages induced in the secondary coils (4 and 5) is respectively measured over exactly one period of the AC voltage.

**2.** Measurement arrangement (14) according to Claim 1,
**characterized**
**in that** the digital logic module (22) is designed to sample the input signals received alternately from the multiplexer (18).

**3.** Measurement arrangement (14) according to Claim 1 or 2,
**characterized**
**in that** the digital logic module (22) is designed at least for magnitude formation, for addition, for subtraction and for division of input signals, or of signals which are derived from the input signals.

**4.** Measurement arrangement (14) according to Claim 3,
**characterized**
**in that** the digital logic module (22) is designed to periodically determine the sum of the root mean square values of the input signals as well as the difference between the mean values of their absolute values by sampling the input signals which are received alternately from the multiplexer (18), and to determine the movement distance from this by quotient formation.

5. Measurement arrangement (14) according to one of the preceding claims, **characterized** **in that** the digital logic module (22) is designed to provide offset correction for the input signals which are received alternately from the multiplexer (18).

6. Measurement arrangement (14) according to one of the preceding claims, **characterized** **in that** the digital logic module (22) is an FPGA.

7. Method for determining a movement distance using a movement distance sensor (1) which operates on the principle of a differential transformer - in particular a measurement arrangement (14) according to one of the preceding claims - and has a primary coil (3) as well as a first and a second secondary coil (4 and 5, respectively), **characterized** **in that** an AC voltage is used as the excitation voltage for the primary coil (3), **in that** the time profile of the first secondary voltage (42) induced in the first secondary coil (4) is measured for exactly one period of the AC voltage, **in that** the time profile of the second secondary voltage (52) induced in the second secondary coil (5) is then in turn measured for exactly one period of the AC voltage, preferably after a stabilization time (46) has elapsed, **in that** the switching between the first and second secondary coils (4 and 5, respectively) in order to measure the induced secondary voltage (42 and 52, respectively) is effected using a multiplexer (18), **in that** the excitation voltage and the switching of the multiplexer (18) are also correlated in time with the clock cycle of a logic module (22), and **in that** the movement distance is determined from the measured secondary voltages (42 and 52, respectively).

8. Method according to Claim 7, **characterized** **in that** absolute values are respectively determined from the measured secondary voltages (42 and 52, respectively), and the movement distance is determined from the difference between these absolute values of the first and second secondary voltages (42 and 52, respectively).

9. Method according to Claim 7 or 8, **characterized** **in that**, after the second secondary voltage (52) has been measured, the time profile of the first secondary voltage (42) induced in the first secondary coil (4) is in turn measured for one period, preferably after a stabilization time (46) has elapsed.

10. Method according to one of Claims 7 to 9, **characterized** **in that** the rectifier mean value of the time profile of the respective secondary voltage (42 and 52, respectively) is used as the absolute value of the secondary voltage (42 and 52, respectively).

**Revendications**

1. Arrangement de mesure (14) comprenant un détecteur de longueur de course (1) fonctionnant selon le principe d'un transformateur différentiel, lequel détecteur comprend une bobine primaire (3) ainsi qu'une première et une deuxième bobine secondaire (4 ou 5), et comprenant un arrangement de circuit (16) qui est relié par technique de commutation avec la première et la deuxième bobine secondaire (4 ou 5) afin de déterminer une longueur de course, l'arrangement de circuit (16) comprenant un multiplexeur (18), un convertisseur A/N (20) et un composant logique numérique (22), la première et la deuxième bobine secondaire (4 ou 5) étant connectées au multiplexeur (18) respectivement par le biais d'un étage d'entrée, la sortie du multiplexeur (18) étant reliée par technique de commutation avec l'entrée du convertisseur A/N (20) et la sortie du convertisseur A/N (20) étant acheminée à l'entrée du composant logique numérique (22), lequel est configuré pour déterminer la longueur de course à partir des signaux d'entrée reçus en alternance provenant du multiplexeur (18), un générateur de tension (38) pour alimenter la bobine primaire (3) en tension alternative étant en outre prévu et raccordé à celle-ci, l'arrangement de circuit (16) comprenant une unité de contrôle (37) reliée avec le composant logique numérique (22), le multiplexeur (18) et le générateur de tension (38), laquelle est configurée pour générer une tension d'excitateur du générateur de tension (38), corrélée dans le temps avec l'horloge du composant logique (22), et pour une permutation du multiplexeur (18), corrélée avec l'horloge du composant logique (22), et le multiplexeur (18) ainsi que le composant logique (22) étant configurés de telle sorte que l'évolution dans le temps des tensions induites dans les bobines secondaires (4 et 5) est respectivement mesurée sur exactement une période de la tension alternative.

2. Arrangement de mesure (14) selon la revendication 1, **caractérisé en ce que** le composant logique numérique (22) est configuré pour échantillonner les signaux d'entrée reçus en alternance provenant du multiplexeur (18).

3. Arrangement de mesure (14) selon la revendication 1 ou 2, **caractérisé en ce que** le composant logique numérique (22) est configuré au moins pour calculer une valeur, pour une addition, pour une soustraction et pour une division de signaux d'entrée ou de signaux dérivés des signaux d'entrée.

4. Arrangement de mesure (14) selon la revendication 3, **caractérisé en ce que** le composant logique numérique (22) est configuré pour déterminer périodiquement, par échantillonnage des signaux d'entrée reçus en alternance provenant du multiplexeur (18), la somme de leurs valeurs effectives ainsi que la différence des valeurs moyennes de leurs valeurs absolues et pour déterminer à partir de celles-ci la longueur de course par un calcul de quotient.

5. Arrangement de mesure (14) selon l'une des revendications précédentes, **caractérisé en ce que** le composant logique numérique (22) est configuré pour une correction du décalage des signaux d'entrée reçus en alternance provenant du multiplexeur (18).

6. Arrangement de mesure (14) selon l'une des revendications précédentes, **caractérisé en ce que** le composant logique numérique (22) est un FPGA.

7. Procédé pour déterminer une longueur de course avec un détecteur de longueur de course (1) fonctionnant selon le principe d'un transformateur différentiel, notamment un arrangement de mesure (14) selon l'une des revendications précédentes, comprenant une bobine primaire (3) ainsi qu'une première et une deuxième bobine secondaire (4 ou 5), **caractérisé en ce**

   **qu'**une tension alternative est utilisée comme tension d'excitateur pour la bobine primaire (3),

   **que** l'évolution dans le temps de la première tension secondaire (42) induite dans la première bobine secondaire (4) est mesurée pendant exactement une période de la tension alternative,

   **que** l'évolution dans le temps de la deuxième tension secondaire (52) induite dans la deuxième bobine secondaire (5) est ensuite mesurée à son tour pendant exactement une période de la tension alternative, de préférence après écoulement d'une période transitoire (46),

   **que** la permutation entre la première et la deuxième bobine secondaire (4 ou 5) en vue de mesurer la tension secondaire induite (42 ou 52) s'effectue par le biais d'un multiplexeur (18),

   **que** la tension d'excitateur et la permutation du multiplexeur (18) sont en outre corrélées avec l'horloge d'un composant logique (22) et

   **que** la longueur de course est déterminée à partir des tensions secondaires (42 ou 52) mesurées.

8. Procédé selon la revendication 7, **caractérisé en ce que** des valeurs absolues sont respectivement déterminées à partir des tensions secondaires (42 ou 52) mesurées et la longueur de course est déterminée à partir de la différence de ces valeurs absolues de la première et de la deuxième tension secondaire (42 ou 52).

9. Procédé selon la revendication 7 ou 8, **caractérisé en ce qu'**après la mesure de la deuxième tension secondaire (52), l'évolution dans le temps de la première tension secondaire (42) induite dans la première bobine secondaire (4) est de nouveau mesurée pendant une période et de préférence après écoulement d'une période transitoire (46).

10. Procédé selon l'une des revendications 7 à 9, **caractérisé en ce que** la valeur moyenne redressée de l'évolution dans le temps de la tension secondaire (42 ou 52) respective est utilisée comme valeur absolue de la tension secondaire (42 ou 52).

Fig. 1

Fig. 2

Fig. 3

**EP 1 750 098 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4982156 A
- US 2005046593 A1
- US 4651130 A